Europäisches Patentamt

European Patent Office

Office européen des brevets

(11) Publication number: **0 436 458 A2**

# EUROPEAN PATENT APPLICATION

(21) Application number: 90480200.6

(51) Int. Cl.⁵: **G06F 13/38**, G06F 13/40

(22) Date of filing: 27.11.90

(30) Priority: 04.01.90 US 461135

(43) Date of publication of application:
**10.07.91 Bulletin 91/28**

(84) Designated Contracting States:
**DE FR GB**

(71) Applicant: **International Business Machines
Corporation
Old Orchard Road**
Armonk, N.Y. 10504(US)

(72) Inventor: **Striemer, Bryan Lester
914 Eighth Avenue NW
Waseca, Minnesota 56093(US)**

(74) Representative: **Colas, Alain
Compagnie IBM France Département de
Propriété Intellectuelle
F-06610 La Gaude(FR)**

(54) **Programmable connector.**

(57) An apparatus for connecting a general purpose or host computer and a device is disclosed. Also disclosed is a method for using this apparatus. Basically, a connector or cable includes a microprocessor and memory in addition to the connectors necessary to connect to the general purpose computer and the device. The memory included, stores device code or a set of instructions for controlling the device and sets of instructions for controlling the two connectors to allow data to pass between the general purpose computer and the device. The microprocessor executes these instruction sets. Advantageously, the device code developed for a prior application can be downloaded to the cable or connector and the control code for controlling the two connectors can be developed using tools available to a user on the computer used in the prior application.

FIG. 2

EP 0 436 458 A2

## PROGRAMMABLE CONNECTOR

In a general purpose computer, it is advantageous to provide the ability to connect to as many devices as possible. To accomplish this objective, use is made of many standard parts, including input/output connectors or communication ports. Even though standard input/output connectors or communications ports are provided on computers there are many instances in which the general purpose computer and another device are unable to communicate directly with each other. This stems from the fact that although the standard input/output connectors or communications ports are provided, the use of these standard connectors or ports is not necessarily standard.

A standard connector or port generally has a number of pins which are used to carry data and other signals to or from the general computer and to or from another device such as a printer, a second computer or a memory unit. The general computer is programmed or configured to receive and send certain data and certain types of signals across certain pins of the standard connector or communications port. Certain pins can also be designated as blanks or masked off so that no data or signals pass across the pin. Similarly, the other device is programmed or configured to use certain pins to transfer data and other signals across certain pins. Problems arise when the pins on the general purpose computer and the pins on the other device have been programmed differently. In other words, a certain signal or data will be transferred from the general purpose computer over a designated pin and the other device will expect to receive that signal over a different pin since the other device has been programmed or configured differently.

Other problems occur due to differences in timing of the passing of the data or signal. For example, a user may want to link a device programmed to transfer data to a computer which is always ready to receive data to a different, general computer which handles a multitude of tasks. In many instances, a general computer which handles a multitude of tasks may be programmed to place receipt of data at a slightly lower priority than other tasks it has been programmed to perform. As a result, the general purpose computer may not always be ready to receive data. In this case, the device, which is now linked to the general purpose computer handling a multitude of tasks, may send the data expecting the general purpose computer to be ready to receive the data. The result can be loss of data since the device sending the data thought that the general computer is always ready to receive data when in fact it was not because the computer was performing a more important task. In short, a multitude of problems can result due to the fact that the device and the general purpose computer are programmed Differently with respect to the transfer of data. This problem is analogous to a tourist who knows no French trying to order from the menu in a Parisian restaurant. Most of the time the data is never received and even when the data is received, it is generally so garbled that the order is rarely understood.

In the past the problem was solved by "reprogramming" either the device or the general purpose computer so that either the device or the general purpose computer speaks the same language as the other. Most often, the "reprogramming" has generally been accomplished by adding hardware to the general purpose computer so that it emulates the communications protocol of the particular device to which it must transfer data or "talk". The hardware added to the general purpose computer generally comes in the form of a printed circuit board which is added to the general purpose computer typically in a slot provided on the general purpose computer.

Among the problems with such solutions is that a piece of hardware must be purchased for specific devices which are attached to the general computer. For example, the user must buy a communications board to insert into a general purpose computer that he wants to have communicate with the specific device. If the user wants to replace a specific device with something slightly different, a new communications board may have to be purchased. In addition, for some of the specific devices such a communications board may not be available. As a result, the user may make select the general purpose computer on the basis of which general purpose computers has a communications board available which allows the specific device to communicate with the computer rather than on the basis of which general purpose computer may provide the optimal operation or total system.

Also among the problems with such a solution is a lack of flexibility. If the user wants to attach a slightly different specific device, the communications board may not accommodate the new requirements. If a problem arises with a hardware communications board the only way to fix it is to send the board back for rework or get a new board which incorporates the fix. In the meantime, the specific situation that results in the problem has to be avoided or if a problem arises in the normal course of the way one uses the specific de vice, the user may not be able to use the device until the hardware communications board can be fixed.

Others have solved the problem by providing a cable which contains hardwired logic which, after setting several switches, will match the data lines, handshake or proto col lines, and the control lines. An example of such a solution is available from IQ Technologies Company which produces such a cable which interfaces a standard communications port known as the RS232. This solution still has shortcomings. Although it is flexible in reassigning pins and voltage levels, it does nothing for speed matching incompatibilities, protocol conversion, or making it easier to port specific device software. In addition, the cable is still basically a hardware solution. If problems crop up with the cable the users options are limited to obtaining a new cable which incorporates a fix or sending the cable back for rework.

Another solution is to use a personal computer (PC) as a communications aid. The PC is attached between the general purpose computer and the unique device. One cable connects the general purpose computer to the PC and a second cable connects the unique device to the PC. The PC is programmed to emulate the protocol of the general purpose computer at a first port and the protocol of the unique device at a second communications port. The PC is also programmed to hold the data being transferred and to transform or "translate" the data so that it travels to its destination in an understandable form.

This solution also has problems. Amongst the problems is the lack of control by the general purpose computer to reset the PC in the event of an error. Also, the PC is an additional computer with its own operating system, diagnostics and power-on procedures which greatly increases the operational and maintenance complexities of the overall system. In addition, adding a PC and an extra cable for several connections between unique devices and a general purpose computer increases the monetary cost of a system. Another problem associated with this solution is that adding of PC's to a system also requires much more space. Added space requirements are a very big concern in offices where many people share a small office. In summary,although this solution is flexible, it requires much more additional space and will increase the cost of a total system. For some systems adding a PC may be more expensive than replacing a peripheral with on e capable of communicating directly with the general computer.

As a result, there is a need for a cable which allows for more flexible solutions and which can be used with many unique devices. There is also a need for a cable which can be tested and which can be programmed by the user using familiar tools available to the user. There is also a need for a solution which will use very little additional space.

A connector or cable for connecting a general computer and a unique device is disclosed. The cable includes a microprocessor and a dynamic random access memory (known in the art as a DRAM) as well as a pair of standard communications ports. One communication port is attached to the general computer and the other communication port or standard connector is attached to the unique device. The microprocessor and the dynamic random access memory is electrically connected between the two communications ports or standard connectors. In us e, the microprocessor is programmed so that it can receive data from either the unique device or the general purpose computer over the proper pins on the standard connector. Once received, the data or the signal, may be stored in the DRAM until the de vice to which the data is to be sent indicates that it is ready to receive data. When the device to which the data is to be sent is ready, the data is placed on the proper pins so that the device to which the data is sent will recognize the data.

Advantageously, the microprocessor in the cable can be programmed to carry data over any configuration of pins on one standard interface to any configuration of pins on a second standard interface. In addition, the microprocessor can be programmed so that the timing requirements on both the general purpose computer and the unique device are met. Programming the microprocessor is accomplished using familiar tools known to the user. The program, once perfected, can be downloaded t o the microprocessor on the cable. A new program containing any fixes can also be downloaded to the cable. This inventive cable provides for a flexible, cost effective solution which also requires very little additional space.

Fig. 1 is top view of a cable connecting a device to a general purpose computer.

Fig. 2 is a block diagram showing the basic components of the smart programmable cable.

Fig. 3 is a block diagram showing a typical existing application on a dedicated computer.

Fig. 4 is a block diagram showing the development environment for programming of the smart programmable cable.

Fig. 5 is a block diagram showing the end use environment of the smart programmable cable.

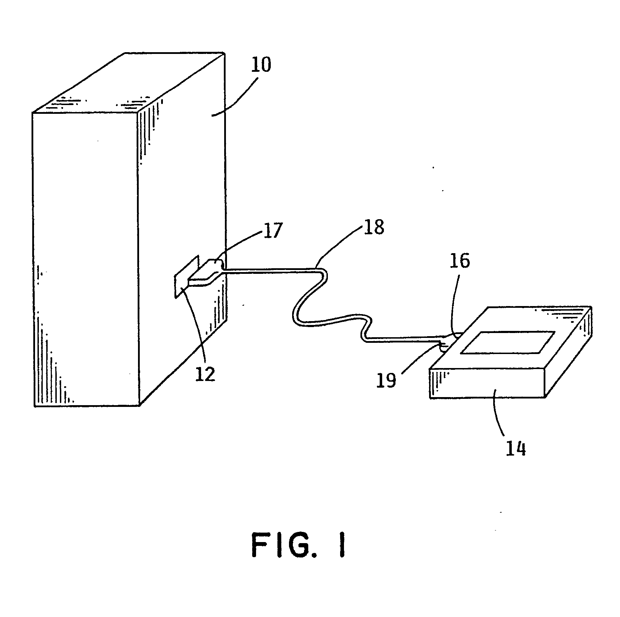

Shown in Fig. 1 is a general purpose computer 10 which is provided with at least one communications port or standard interface 12. Also shown is a peripheral device 14 which also has a communications port or standard interface 16. The peripheral device 14 is any of a number of devices such as a printer or cash register. The interface or communications port 12 and the communications port 16 may be the same standard port but used in different manners or could be two different communications ports. A programmable cable 18 is shown connecting the general purpose computer and the peripheral device 14. The programmable cable 18 is attached to the port 12 of computer 10 and the port 16 of the peripheral device 14. The programmable cable 18 has a connector 17 for attaching to the computer 10 physically located on one end of the cable 18 and a connector 19 on the other end of the cable 18 for connecting to the peripheral device 14.

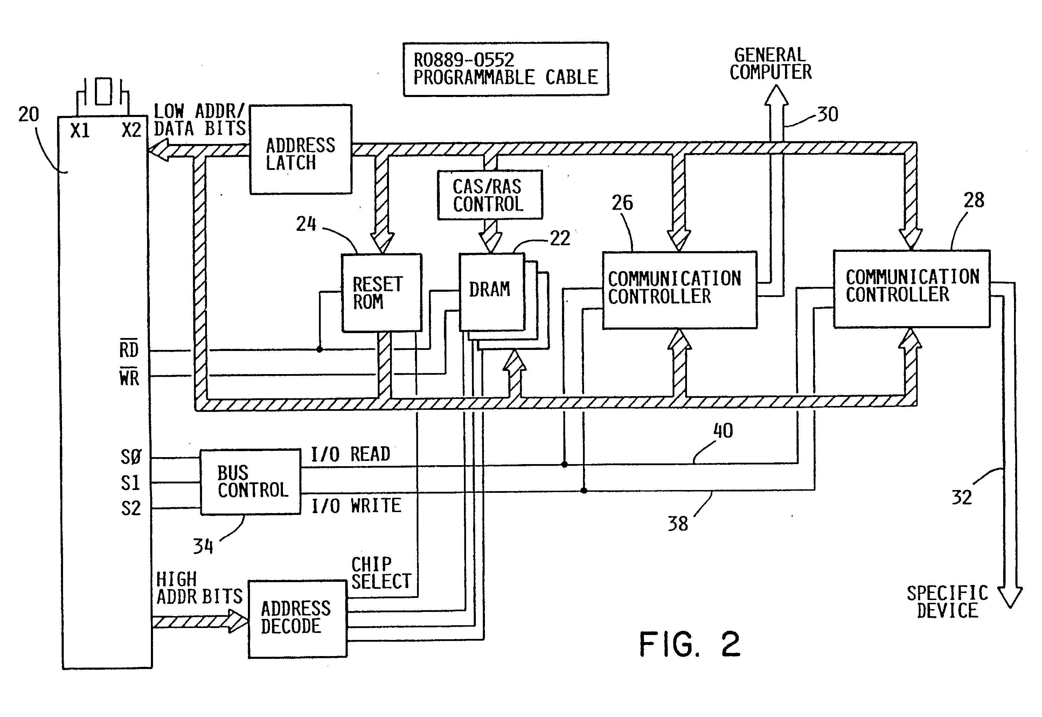

The programmable cable 18 will now be described in detail by referring to the schematic diagram shown in Fig. 2. It should be noted that the programmable cable or connector 18 is not limited to a particular material. For example, the cable 18 may use fiber optic cable for transmitting data and signals rather than a metallic conductor. The programmable cable 18 includes a microprocessor 20, a DRAM or dynamic random access memory 22, a ROM or read only memory 24, and a first communications port controller 26 and a second communications port controller 28. The first communications port controller 26 is connected to a standard connector on one end of the cable 18. Although the first communications port controller 26 can be attached to either connect or on either end of the cable 18, for ease of discussion it will be assumed that communications port controller 26 is attached to connector 17 which attaches to the computer 10. The second communications port controller 28 is attached or electrically connected to the connector 19 on the other end of the programmable cable 18 which is attached to the peripheral device 14. The first communications port controller 26 has a group of lines 30 and the second communications port controller 28 has a group of lines 32. Each group of lines includes transmit, receive, data terminal ready, clear to send, carrier detect, data set ready, request to send and ring indicator which are generally standard in most applications and therefore were not separately numbered. The group of lines 30 and the group of lines 32 receive and transmit data between the device to which each is connected and the electronics on the programmable cable 18.

The programmable cable 18 also includes a bus control 34 which supports the microprocessor 20. The bus control 34 supports the microprocessor by minimizing the amount of microprocessor resource needed to control the input and output functions of the microprocessor. The bus control is also selected so that it emulates the same type of bus control which is used in other common hardware configurations, such as a personal computer. The bus control is electrically connected to several pins on the microprocessor 20 and is also electrically connected to the first communications port controller 26 and the second communications port controller 28 with an I/O write line 38 and an I/O read line 40. The microprocessor 20 is electrically connected to the DRAM 22 with a write line 42. The micro processor 20 is also electrically connected to the ROM 24 and the DRAM 22 with a read line 44.

The programmable cable 18 also includes a controller 36 for controlling the multiplexing of address lines to the DRAM 32.

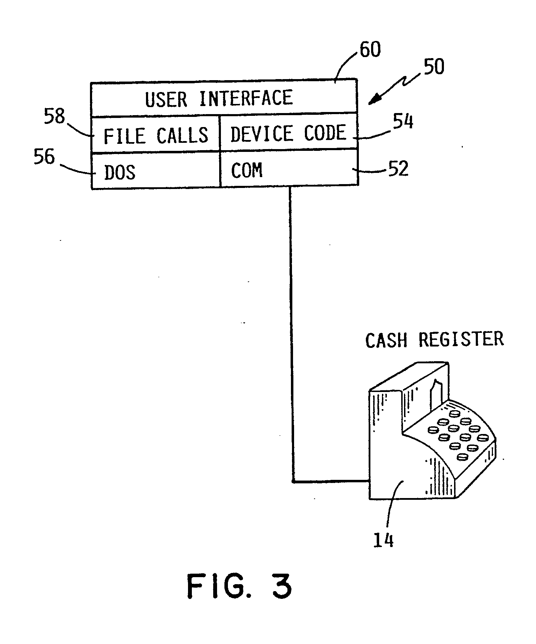

In operation, a set of code called device code is downloaded from another computer to the electronics on the programmable cable. Fig. 3, shows an example of an existing application on a personal computer. Block 50 represents the software on the existing or personal computer. Block 50 is subdivided into the hardware and the several groups of software which are the building blocks needed to form the software and hardware combination for running the existing application. Block 52 is the communications port over which data and information is transferred between the existing computer (not shown but represented by block 50) and a unique peripheral device 14, such as the cash register shown in Fig. 3. The communications port 52 is usually embodied within a hardware circuit board found within the existing computer, such as a personal computer. The programmable cable 18 includes the same or a similar hardware communications port 52. Block 54 represents the device code which is the group of code which controls the unique device 14. Block 56 represents the DOS (Disk Operating System) commands and block 58 represents the file calls which are called upon as the existing application is running. Block 60 represents the group of software which provides the user interface on a personal computer.

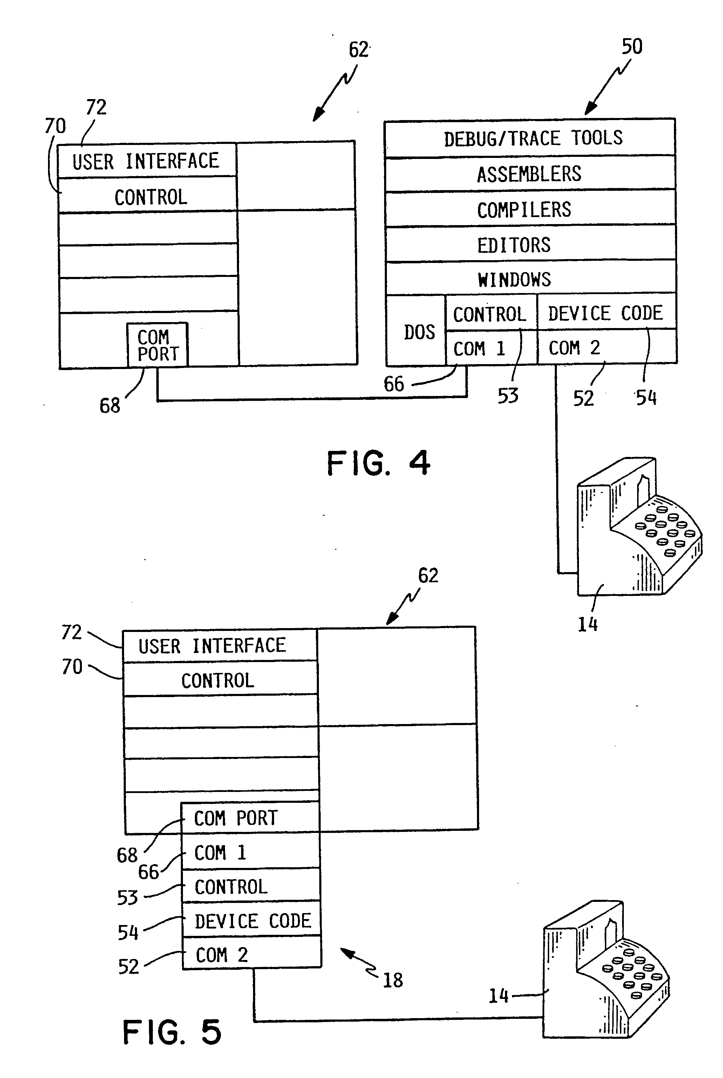

Fig. 5 shows a block diagram of the software on the programmable cable 18 as it interacts and is connected to the general computer or host computer 10. In Fig. 5, the general or host computer 10 is in t he form of a block 62 which in turn contains blocks of both hardware and software within the computer 10. Fig. 4 shows the development environment which is necessary for programming the programmable cable 18. Fig. 4 also includes a computer 10 shown in the form of a block 62 which contains a set of software and hardware blocks. The computer 10 shown in both Figs. 4 and 5 are an AS/400 computer made by International Business Machines Corp. It should be understood that this programmable cable 18 may be used to connect a peripheral device 14 to many other computers such as those built by Digital Equipment Corporation or Data General or any of a number of other manufacturers. Each computer manufacturer uses different software and hardware blocks. To avoid confusion, only the software blocks which need to be modified are specifically numbered. It should also be noted that the software blocks that are modified are common to most manufacturers of computers and peripherals.

In order to use the programmable cable, the device code is downloaded to the DRAM 22 on the programmable cable 18 and the user must also download some newly developed protocol software which controls the a first communications controller 26 and the second communications controller 28 on the programmable cable 18. As shown in Fig. 4, this protocol software can be developed using the existing computer and editors, compilers, assemblers, and debug and trace tools which run on the same type of computer used in the existing application as shown in Fig. 3. It should be noted that the most common type of dedicated computer used in these existing applications is a personal computer. One of the reasons for the wide use of the personal computer includes the fact that there is an abundance of software available for use on these computers including editors, compilers, assemblers, and debug and trace tools. For the sake of ease of discussion, applicant will refer to the type of computer used in the existing application as well as in programming the programmable cable 18 as a personal computer.

As mentioned above, in order to use the programmable cable 18, the user is required to develop protocol software. Fig. 4 shows the development environment for developing this protocol software. Basically, the computer used previously in the existing application is provided with an additional communications port 66 which is required to transfer data between a communications port 68 on the general or host computer 10 (represented as box 62 in Figs. 4 and 5) and the existing computer (represented as box 50). The communications port 66 will also be duplicated on the programmable cable 18. Thus, portions of the programmable cable 18, namely the device code 54, the communications port 52, and the communications port 66, are duplicated on the computer which formerly ran the existing application. In order to use the programmable cable the control function, shown as box 53, which formerlycontrolled one port 52, must be reprogrammed so that it now controls port 52 and port 66, which interface with the unique device 14 and the general or host computer 10 (represented in Figs. 4 and 5 by box 62), respectively.

Advantageously, the user reprograms the communications control represented as box 53 using well known and familiar tools. The user employs the same tools which were used to program the existing computer (represented by box 50) to produce the new control software 53. Another advantage is that once the new control software is developed it is used in the development environment shown in Fig. 4 until the user feels assured that all the bugs or glitches in the control program 53 have been found and corrected. Also while in the development environment shown in Fig. 4, the user can modify a control block 70 and a user interface 72 in the computer 10 (represented as block 62 in Fig. 4). By modifying the control 70 and the user interface 72, the user can modify the user interface so that it duplicates the interface in the previously used application shown in Fig. 3.

In order to use the programmable cable 18, the device code represented by block 54 and the communications controlling software represented by block 53 are downloaded onto the electronics of the programmable cable 18. Advantageously, the existing code necessary to control the device represented in block 54 remains unchanged. This allows for connection of the existing unique peripheral device 14 with a minimal amount of software development. An additional advantage is that use of the programmable cable 18 is flexible since use of the cable with another application merely requires downloading of the device code and a newly developed communications control 53 from the new existing application.

Downloading of the device code 54 and the communications control code 53 will now be discussed by referring to Fig. 2. A reset message is sent to the ROM or Read Only Memory 24 which triggers a program in the ROM which is read by the microprocessor 20. This program essentially commands the microprocessor to scan the second communications controller 28 for sets of code. The device code 54 and the new control code 53 is received bit by bit at the second communications controller 28 through the group of lines 32. The device code is sent by way of an I/O write line 38 to the microprocessor 20. The bus control 34 controls the transfer of the device code into the microprocessor 20. The device code is then sent from the microprocessor 20 and written into the DRAM or dynamic random access memory 22. The device code and the communications code are transferred over the write line 42 from t he microprocessor 20 to the DRAM 22. The result of downloading the device code, represented as block 54, is that the programmable cable 18 now contains the device code 54 and the control code 53 as shown in Fig. 5.

In operation, the programmable cable 18 controls the peripheral device 14 using the device code 54. Furthermore, the data is transferred from the device 14 to the general or host computer using the newly developed control code 53. The control code 53 controls the first port con troller 26 which interfaces with the port 56 on the programmable cable and is also connected to the communications port 68 on the host or general computer 10 (depicted as box 62 in Fig. 5). The control code 53 also controls the second port controller 28 which interfaces with the port 52 on the programmable cable and is also connected to the unique device 14. The first port controller 26 and the second port controller 28 have some capacity for buffering data. Data is passed into and out of the D RAM 22 as required by the control code 53. Storage and retrieval of the data is achieved and controlled in a conventional manner using the CAS/RAS control 36 to multiplex the address of the DRAM and an address decoder and and address latch and address and data buses.

The present invention and the best mode of practicing it has been described. It is to be understood that the foregoing description is illustrative only and that other means and techniques can be employed without departing form the full scope of the invention as described in the appended claims.

## Claims

1.  A connector for attaching a device to a computer comprising :
    a first communications port; and
    a second communications port;
    charaterized in that it further comprises :
    means for storing a set of instructions for controlling the device and the first communications port and a second communications port; and
    means for processing the set of instructions for controlling the device and the first communications port and the second communications port.

2.  The connector for attaching the device to a computer as described in Claim 1 wherein the set of instructions for controlling the device and the first communications port and a second communications port allows data to be transferred between the device and the computer.

3.  The connector for attaching the device to a computer as described in Claim 2 wherein the set of instructions for controlling the device and the first communications port and a second communications port further comprises instructions for controlling the device previously written for use with another computer.

4.  The connector for attaching the device to a computer as described in Claim 1 wherein the connector comprises a fiber optic conductor.

5.  The connector for attaching a device to a computer as described in Claim 1 wherein the connector comprises a metallic conductor.

6.  The connector for attaching a device to a computer as described in Claim 1 wherein the means for storing a set of instructions for controlling the device and the first communications port and a second communications port comprises a dynamic random access memory.

7.  The connector for attaching a device to a computer as described in Claim 6 further comprising means for storing a set of instructions for reading the set of instructions for controlling the device and the first communications port and a second communication s port.

8.  The connector for attaching a device to a computer as described in Claim 7 wherein said means for storing a set of instructions for reading the set of instructions for controlling the device and the first communications port and a second communications port is a read only memory.

9.  The connector for attaching a device to a computer as described in Claim 1 wherein the means for processing the set of instructions controlling the device and the first communications port and the second communications port is a microprocessor.

10. The connector for attaching a device to a computer as described in Claim 9 wherein the microprocessor includes a clock and a timer.

11. The connector for attaching a device to a computer as described in Claim 7 further comprising a controller for multiplexing inputs and outputs of the dynamic random access memory.

12. The connector for attaching a device to a computer as described in Claim 1 further comprising:
    a controller for the first communications port;
    a controller for the second communications port, wherein the set of instructions for controlling the device and the first communications port and the second communications port provides instructions to the controller for the first communications port and the second communications port.

13. The connector for attaching a device to a computer as described in Claim 12 further comprising:
    a bus control electrically connected to the means for processing the set of instructions for controlling the device and the first communications port and the second communications port;

an I/O read line electrically connecting the bus control to the controller for the first communication s port and the controller for the second communications port; and

an I/O write line electrically connecting the bus control to the controller for the first communications port and the controller for the second communications port, wherein the bus control supports the means for processing the set of instructions by lessening the amount of resources necessary to control the I/O read line and the I/O write line.

14. A method for providing a set of instructions for a connector having a first communications port and a second communications port and a memory for storing a set of instructions and a means for processing the set of instructions characterized in that it comprises the steps of :

providing a first computer, used to control a device, with a second communications port, said first computer having a first communications port and having a set of instructions for controlling a device, said first computer attached to the device by way of the first communications port;

attaching the first computer to a second computer by way of the second communication port of the first computer;

creating a set of control instructions for controlling data transfer between the first communications port and the second communications port on the first computer; and

downloading the set of instructions for controlling the device attached to the first computer, and the set of control instructions for controlling data transfer between the first communications port and the second communications port on the first computer, to the connector.

FIG. 1

FIG. 2

FIG. 3

FIG. 4

FIG. 5